# EUROPÄISCHE PATENTSCHRIFT

(11) **EP 3 515 654 B1**
(45) Veröffentlichungstag und Bekanntmachung des Hinweises auf die Patenterteilung: **09.06.2021**
(21) Anmeldenummer: 17749443.2
(22) Anmeldetag: 07.08.2017
(51) Int. Cl.: B23K 26/402, B32B 17/10, C03B 33/07, B23K 26/364, B23K 103/16, B23K 103/00

(54) **VORRICHTUNG UND VERFAHREN ZUR HERSTELLUNG EINER STRUKTURIERTEN FUNKTIONELLEN BESCHICHTUNG AUF EINER GEBOGENEN GLAS-SCHICHT**
DEVICE FOR AND METHOD OF MANUFACTURING A STRUCTURED FUNCTIONAL COATING ON A LAYERED CURVED GLASS
DISPOSITIF ET MÉTHODE DE FABRICATION D'UN REVÊTEMENT STRUCTURÉ FONCTIONNEL SUR UN VERRE COURBÉ MULTICOUCHE

(30) Priorität: 26.09.2016 EP 16190620
(43) Veröffentlichungstag der Anmeldung: 31.07.2019
(73) Patentinhaber: SAINT-GOBAIN GLASS FRANCE, 92400 Courbevoie (FR)
(72) Erfinder: YEH, Li-Ya, 52511 Geilenkirchen (DE)
(74) Vertreter: Weber, Sophie
(86) Internationale Anmeldenummer: PCT/EP2017/069939
(87) Internationale Veröffentlichungsnummer: WO 2018/054595

(56) Entgegenhaltungen:
- EP-A1- 3 034 295
- DE-B3- 10 316 576
- US-A- 5 131 967
- US-A1- 2009 242 527

## Beschreibung

Die Erfindung betrifft eine Vorrichtung und ein Verfahren zur Herstellung einer strukturierten funktionellen Beschichtung für eine Glas-Schicht.

### Hintergrund der Erfindung

Aus dem Stand der Technik ist beispielsweise die DE 103 16 576 B3 bekannt, aus der ein Verfahren und eine Vorrichtung zur Herstellung weicher Kontaktlinsen bekannt ist. Das Verfahren basiert auf spezifischen Schritten zur Hydratiserung und Entsalzung einer weichen Kontaktlinse und anschließender Laserabtragung von Linsenmaterial zur Herstellung sogenannter Multifokallinsen. Weiterhin ist aus dem Stand der Technik die US Patentanmeldung 2009 / 242 527 A1 bekannt. In dieser Patentanmeldung wird ein Verfahren zur Abtragung einer Kratzschutzschicht bzw. einer Antireflexschicht aufgezeigt, um eine verbesserte Klebehalterung einer Linse einer Rahmenlosen Brille bereitzustellen.

Am Beispiel der Herstellung einer herkömmlichen Fahrzeugscheibe werden nachfolgend einige Probleme dargestellt werden, die einzeln als auch in Kombination Anlass zur Erfindung gegeben haben.

Um aerodynamischen als auch stilistischen Anforderungen Rechnung zu tragen sind eine Vielzahl von Fahrzeugscheiben gebogen. Fahrzeugscheiben tragen zudem eine Vielzahl von Funktionen, z.B. Scheibenheizung, Antennen, Sensoren, etc.

Um z.B. eine elektrische Heizung bereitzustellen, werden z.B. mittels bekannter Techniken, z.B. wie Siebdruck oder Bedampfen, dünne elektrisch leitfähige Schichten aufgebracht.

Bei der Herstellung wird in bisherigen Verfahren, wie z.B. in EP 3 034 295 A (Basis für den Oberbegriff der Ansprüche 1 und 7) beschrieben, zunächst die elektrisch leitfähige Schicht auf eine ebene Glas-Scheibe aufgebracht und anschließend strukturiert. Dabei können nur kleinere Bereiche, in etwa 15 cm * 15 cm, in einem Schritt bearbeitet werden. Müssen größere Bereiche strukturiert werden so kommt es an den Rändern in aller Regel zu einem Überlapp und Versatz, sodass der Verlauf der strukturierten Kanten Stufen und Sprünge aufweist.

Um eine Glas-Scheibe zu biegen muss diese auf relative hohe Temperaturen, z.B. 600° C, erhitzt werden. Da bei diesen Temperaturen die elektrisch leitfähige Schicht mit der umgebenden Atmosphäre reagieren würde, muss die Beschichtung vollständig durch eine Schutzschicht, z.B. NaSO₄, vor dem Biegen geschützt werden.

Es hat sich jedoch gezeigt, dass dieser Schutz nicht ausreichend ist, sodass es immer noch zu Reaktionen, insbesondere im Kantenbereich der strukturierten funktionellen Beschichtung, kommt.

Ein weiteres Problem ist, dass unter Einfluss der Erwärmung die elektrisch leitfähige Schicht häufig so weit erhitzt wird, dass es zu Fließprozessen insbesondere im Kantenbereich der strukturierten funktionellen Beschichtung kommt. Daher ist die strukturelle Integrität der funktionellen Beschichtung gefährdet.

Zudem können durch beide Einflüsse die optischen Eigenschaften beeinträchtigt werden. So können sich beispielsweise wahrnehmbare optische Störungen im Kantenbereich der funktionellen Beschichtung ergeben.

Nach dem Biegen muss die Schutzschicht wieder aufwändig vollständig entfernt werden.

Ausgehend von dieser Situation ist es eine Aufgabe der Erfindung eine Vorrichtung und ein Verfahren zur Verfügung zu stellen, das es erlaubt, gebogene Glas-Schichten kostengünstig und mit hoher Präzision bereitzustellen, die eine strukturierte Beschichtung aufweisen.

### Kurzdarstellung der Erfindung

Die Aufgabe wird gelöst durch eine Vorrichtung zur Herstellung einer strukturierten funktionellen Beschichtung auf einer ersten gebogenen Glas-Schicht, siehe Anspruch 1. Die Vorrichtung weist eine Halterung zur Aufnahme der ersten gebogenen Glas-Schicht, zumindest einen Laser und eine Lenkeinheit auf. Die Lenkeinheit ist zur Lenkung des Strahls des Lasers über die funktionelle Beschichtung vorgesehen, sodass Teile der funktionellen Beschichtung abgetragen werden, um die funktionellen Beschichtung zu strukturieren.

D.h. mittels der Vorrichtung wird es nunmehr ermöglicht die Glas-Schicht zunächst zu biegen und erst anschließend die Strukturierung vorzunehmen. Somit kann auch der Schritt der Aufbringung funktioneller Beschichtungen auf einen Zeitpunkt nach dem Biegen verlagert werden. Daher kann auf die Aufbringung einer Schutzschicht vor dem Biegen und die Entfernung der Schutzschicht nach dem Biegen verzichtet werden. Daher ergibt sich neben der Vermeidung einer möglichen Reaktion während des Biegens zudem die mögliche Einsparung von Verfahrensschritten.

In einer Ausgestaltung der Erfindung ist die Lenkeinheit dazu vorgesehen den Laser relativ zur Oberfläche der funktionellen Beschichtung zu verschieben. Hierdurch kann eine kostengünstige Herstellung ermöglicht werden.

Gemäß der Erfindung beträgt der Abstand zwischen dem Laser und der funktionellen Beschichtung circa 0,5 m bis zu 2 m. Durch den relativ großen Abstand zwischen Laser und funktioneller Beschichtung kann der Fokalbereich so eingestellt werden, dass kleinere Formabweichungen der Glas-Schicht und/oder der Beschichtung ohne wesentlichen Einfluss auf die Strukturierung sind. Hierdurch kann der Produktionsprozess ohne aufwändige Abstandsmessungen auskommen.

Gemäß einer weiteren Ausgestaltung der Erfindung stellt der Laser eine gepulste Laserstrahlung mit einer Leistung von 100 Watt oder mehr zur Verfügung. Hiermit kann auch über die Distanz von einigen Metern die notwendige Leistung zur Strukturierung aufgebracht werden, sodass die Herstellungszeiträume klein gehalten werden können.

Gemäß noch einer weiteren Ausgestaltung der Erfindung weist das Licht des Lasers eine Wellenlänge von 355 nm, 532 nm oder 1064 nm auf. Somit kann mit herkömmlichen Lasern gearbeitet werden.

In einer weiteren Ausgestaltung der Erfindung stellt der Laser eine gepulste Laserstrahlung mit einer Periode von wenigen Nanosekunden bis wenigen Pikosekunden zur Verfügung. Somit können nicht nur kleine, sondern auch große Strukturen abgetragen werden.

Gemäß einer weiteren Ausgestaltung der Erfindung ist der Laser ein CO₂-Laser. Somit kann mit herkömmlichen Lasern gearbeitet werden.

Die Aufgabe wird auch durch ein Verfahren zur Herstellung einer Glas-Scheibe (siehe Anspruch 7) gelöst, das den Schritt des Erhaltens einer ersten Glas-Schicht aufweist, wobei die erste Glas-Schicht zumindest abschnittsweise eine funktionelle Beschichtung aufweist. Weiterhin weist das Verfahren den Schritt des Strukturierens der funktionellen Beschichtung auf der ersten Glas-Schicht mittels Laser-Ablation auf.

Daher ergibt sich eine Vermeidung einer möglichen Reaktion während des Biegens.

In einer Ausgestaltung der Erfindung wird die funktionelle Beschichtung nach dem Biegen der Glas-Schicht aufgebracht. D.h. mittels des Verfahrens wird es nunmehr ermöglicht die Glas-Schicht zunächst zu biegen und erst anschließend die Strukturierung vorzunehmen. Somit kann auch der Schritt der Aufbringung funktioneller Beschichtungen auf einen Zeitpunkt nach dem Biegen verlagert werden. Daher kann auf die Aufbringung einer Schutzschicht vor dem Biegen und die Entfernung der Schutzschicht nach dem Biegen verzichtet werden.

In einer weiteren Ausgestaltung der Erfindung weist der Schritt des Strukturierens das räumliche Verschieben eines Lasers relativ zur funktionellen Beschichtung auf. Hierdurch kann eine kostengünstige Herstellung ermöglicht werden.

Gemäß einer weiteren Ausgestaltung der Erfindung kann das erfindungsgemäße Verfahren weiterhin den Schritt des Erhaltens einer zweiten Glas-Schicht, wobei die erste Glas-Schicht und die zweite Glas-Schicht entsprechend gebogen sind, den Schritt des Einbringens einer Kombinationsfolie zwischen die funktionelle Beschichtung auf der ersten Glas-Schicht und der zweiten Glas-Schicht, sowie den Schritt des thermischen Verbindens der Glas-Schichten mittels der Kombinationsfolie aufweisen. D.h., das Verfahren kann auch zur Herstellung von Verbundglasscheiben verwendet werden.

### Kurzdarstellung der Zeichnungen

Ausführungsformen der vorliegenden Erfindung werden in exemplarischer Weise mit Bezug auf die angehängten Zeichnungen beschrieben, in denen zeigt:
- Fig. 1: eine schematische Darstellung von Ausführungsformen erfindungsgemäßer Vorrichtungen,
- Fig. 2: eine schematische Schnitt-Darstellung von Glas-Scheiben hergestellt gemäß erfindungsgemäßem Verfahren,
- Fig. 3: eine schematische Darstellung eines Aspektes von Ausführungsformen erfindungsgemäßer Vorrichtungen,
- Fig.4: eine weitere schematische Darstellung eines Aspektes von Ausführungsformen erfindungsgemäßer Vorrichtungen, und
- Fig. 5: ein Flussdiagramm mit Schritten gemäß erfindungsgemäßer Verfahren.

### Ausführliche Darstellung der Erfindung in Bezug auf die Zeichnungen

Nachfolgend wird die Erfindung eingehender unter Bezugnahme auf die Figuren dargestellt werden.

Weiterhin wird nachfolgend der Einfachheit halber in aller Regel immer nur auf eine Entität Bezug genommen werden. Soweit nicht explizit vermerkt, kann die Erfindung aber auch jeweils mehrere der betroffenen Entitäten aufweisen. Insofern ist die Verwendung der Wörter "ein", "eine" und "eines" nur als Hinweis darauf zu verstehen, dass in einer einfachen Ausführungsform zumindest eine Entität verwendet wird.

In den nachfolgend beschriebenen Verfahren können einzelne Schritte in einem einzigen Schritt verkörpert sein und z.B. parallel zueinander ausgeführt werden. Zudem kann die Reihenfolge von Verfahrensschritten variieren, sodass die vorgestellte Reihenfolge der Verfahrensschritte nicht als zwingend anzusehen ist, es sei denn es wird eine bestimmte Reihenfolge als explizit notwendig beschrieben.

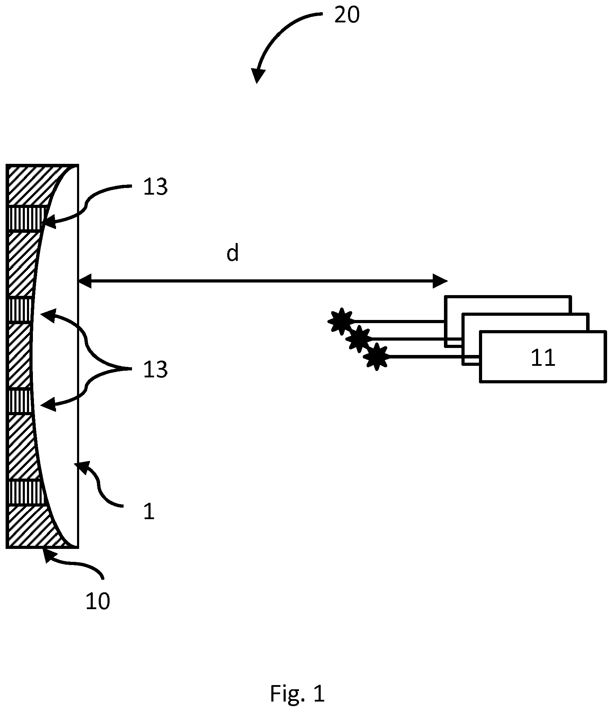

In Figur 1 ist eine schematische Darstellung von Ausführungsformen erfindungsgemäßer Vorrichtungen zur Herstellung einer strukturierten funktionellen Beschichtung 5 auf einer ersten gebogenen Glas-Schicht 2 dargestellt.

Die Vorrichtung 20 weist eine Halterung 10 zur Aufnahme der ersten gebogenen Glas-Schicht 2 auf. Diese kann z.B. rahmenartig für einen bestimmten Typ von Glas-Schicht 2 oder eine Vielzahl von Typen von Glas-Schichten 2 ausgeformt sein.

Dabei kann die Halterung 10 z.B. am Rand und/oder auch im Inneren eine oder mehrere Halteeinrichtungen 13 aufweisen. Halteeinrichtungen 13 können z.B. klammerartig oder als Unterdruckkammern ausgeführt sein. Besonders vorteilhaft sind Unterdruckkammern, mit denen die Glas-Schicht 2 an einer Vielzahl von Stellen schnell und zuverlässig gehalten werden kann. Die Halterung 10 ist dabei bevorzugt so ausgeformt, dass die jeweilige Glas-Schicht 2 im Wesentlichen spannungsfrei gehalten wird. Hierzu weist die Halterung 10 eine im Wesentlichen an die Form der gebogenen Glas-Schicht angepasste Form mit geringen Toleranzen im Aufliegebereich von bevorzugt weniger als +/- 0,5 mm, besonders bevorzugt weniger als +/- 0,2 mm, auf.

Weiterhin weist die Vorrichtung 20 zumindest einen Laser 11 und eine Lenkeinheit 12 auf. Die Lenkeinheit 12 ist zur Lenkung des Strahls des Lasers 11 über die funktionelle Beschichtung 5 vorgesehen, sodass Teile der Beschichtung 5 abgetragen werden, um die funktionelle Beschichtung 5 zu strukturieren. Das Abtragen der Beschichtung 5 kann dabei sowohl durch ein direktes Bestrahlen der Beschichtung 5 als auch durch indirektes Bestrahlen der Beschichtung 5 durch die Glas-Schicht 2 hindurch erfolgen. D.h. mittels der Vorrichtung 20 wird es nunmehr ermöglicht die Glas-Schicht zunächst zu biegen und erst anschließend die Strukturierung vorzunehmen.

Somit kann auch der Schritt der Aufbringung funktioneller Beschichtungen 5 auf einen Zeitpunkt nach dem Biegen verlagert werden. Daher kann auf die Aufbringung einer Schutzschicht vor dem Biegen und die Entfernung der Schutzschicht nach dem Biegen verzichtet werden.

Da die Strukturierung erst nach dem Biegen stattfindet werden die bisher auftretenden Probleme von Reaktionen an den strukturierten Kanten als auch die Änderung der optischen Eigenschaften der Strukturen durch das Erhitzen vermieden.

Zudem können, wenn das Aufbringen der funktionellen Beschichtung 5 auf einen Zeitpunkt nach dem Biegen verlagert wird, auch noch die Verfahrensschritte des Aufbringens einer Schutzschicht vor dem Beigen und des Entfernens der Schutzschicht nach dem Biegen aus dem Herstellungsverfahren genommen werden, wodurch sich ein Zeit- und Kosten-Vorteil ergibt.

Je nach Ausgestaltung der Vorrichtung 20 können ein oder mehrere Laser 11 vorgesehen sein. Diese Laser 11 können räumlich unterschiedlich angeordnet sein und/oder unterschiedliche optische Eigenschaften, wie Pulsdauer, Wellenlänge, Leistung aufweisen.

Soweit die Erfindung auf Strukturierung der Beschichtung 5 Bezug nimmt, ist dabei jegliche Art von Strukturierung gemeint, insbesondere jedoch der komplette Abtrag zur Erzeugung größerer Freiflächen, der linienartige Abtrag zur Erzeugung von z.B. leiterbahnähnlichen Strukturen, wie z.B. Heizdrähte und/oder Antennen, als auch die Erzeugung von gitterartigen Strukturen. Die Breite der Strukturierung der Beschichtung 5 ist typischerweise 100-150 µm oder großer. Weiterhin, soweit die Erfindung Bezug auf funktionelle Beschichtungen nimmt, sind damit insbesondere elektrisch leitfähige Beschichtungen, wie z.B. silberhaltige Schichten, gemeint. Eine andere funktionelle Beschichtung ist z.B. eine Low-E-Beschichtung. Wesentlich ist hieran nur, dass es einen geeigneten Laser 11 gibt, der die jeweilige Beschichtung 5 abtragen kann.

Ohne weiteres kann vorgesehen sein, dass die Fokusposition des Lasers 11 automatisch korrigiert wird, sodass eine genaue Strukturierung ohne zusätzliche Verschiebung von Laser 11 relativ zur Glas-Schicht 2 bzw. Beschichtung 5 erreicht werden kann. Beispielsweise kann die Fokusposition eine Toleranz von +/-5mm aufweisen, sodass z.B. die Biegetoleranz einer gebogenen Glas-Schicht 2 gut kompensiert werden kann.

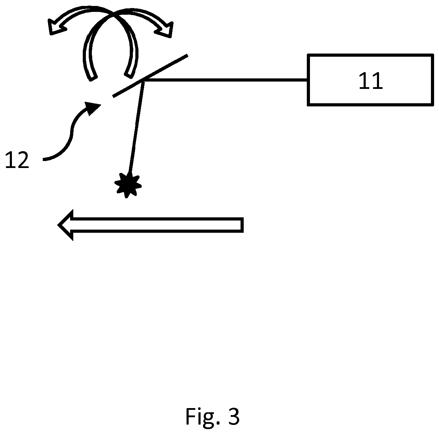

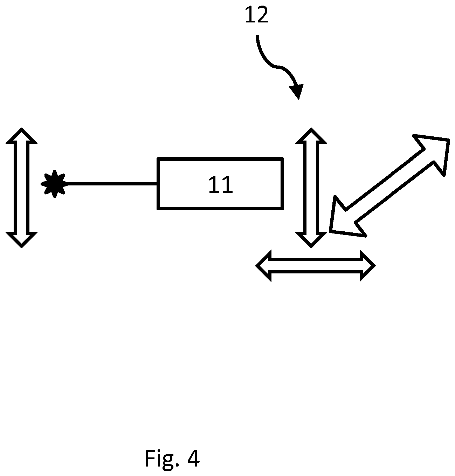

Als Lenkeinheit 12 im Sinne der Erfindung können unterschiedliche Prinzipien zur Anwendung kommen, wie in den Figuren 3 und 4 beispielhaft aufgezeigt.

Gemäß der Erfindung ist für einen Laser 11 (oder eine Mehrzahl von Lasern 11) eine Lenkeinheit 12 in Form eines Kippspiegels vorgesehen. Abhängig von den Freiheitsgraden des Schlittens als Beispiel einer Lenkeinheit 12 in Figur 3 kann damit die gebogene (dargestellt konkave) Oberfläche einer Glas-Scheibe 1 mit zum Laserstrahl hin orientierter funktioneller Beschichtung 5 in einer oder mehreren Richtungen abgescannt werden. Durch entsprechende Steuerung der Bewegung der Lenkeinheit und des Lasers 11 kann dann die funktionelle Beschichtung strukturiert werden.

Gemäß der Erfindung, alternativ oder zusätzlich ist vorgesehen, dass für einen Laser 11 (oder eine Mehrzahl von Lasern 11) eine Lenkeinheit 12 in Form eines ein-, zwei- oder drei-dimensional verschiebbaren Schlittens vorgesehen ist. Abhängig von den Freiheitsgraden des Spiegels als Beispiel einer Lenkeinheit 12 in Figur 4 kann damit die gebogene (dargestellt konkave) Oberfläche einer Glas-Scheibe 1 mit zum Laserstrahl hin orientierter funktioneller Beschichtung 5 in einer oder mehreren Richtungen abgescannt werden. Durch entsprechende Steuerung der Bewegung der Lenkeinheit und des Lasers 11 kann dann die funktionelle Beschichtung strukturiert werden.

Ohne weiteres können hier auch Mischformen vorgesehen sein.

Wenn nur eine geringe Anzahl von Lasern 11 mit fester Position relativ zur Halterung 10 zum Einsatz kommt ist dies vorteilhaft, da dann weniger Grenzbereiche mit Überlapp und Versatz existieren.

Grenzbereiche treten auf, wenn ein Laser zur Erzielung einer größeren strukturierten Fläche in Bezug auf sein Scanfeld verschoben werden muss. Da eine gewisse Toleranz sowohl in der Dicke der Glas-Schicht 2 als auch der funktionellen Beschichtung 5 vorhanden ist und zudem bei der Verschiebung von einer Position zu einer anderen Position es zu Spiel kommt, muss dann ein gewisser Überlapp eingeplant werden. Durch die Toleranzen entsteht aber auch ein leichter Versatz.

Gemäß der Erfindung beträgt der Abstand d zwischen dem Laser 11 und der funktionellen Beschichtung 5 wie in Figur 1 skizziert circa 0,5 m bis zu 2 m. Die Strecke d muss dabei nicht linear verlaufen, sondern es können auch ein oder mehrere Umlenkelemente im Strahlengang vorgesehen sein. D.h. d bezeichnet die Weglänge, die ein Lichtstrahl nach Verlassen des Lasers 11 bis zum Auftreffen auf die zu strukturierende funktionelle Beschichtung 5 durchläuft.

Durch den relativ großen Abstand d zwischen Laser 11 und funktionellen Beschichtung 5 kann der Fokalbereich so eingestellt werden, dass kleinere Formabweichungen der Glas-Schicht 2 und/oder der Beschichtung 5 ohne wesentlichen Einfluss auf die Strukturierung sind. Hierdurch kann der Produktionsprozess ohne aufwändige Abstandsmessungen auskommen. Zudem wird durch einen relativ großen Abstand ermöglicht, dass das Scanfeld so groß sein kann, dass der Laser 11 in Bezug auf einen zu strukturierenden Bereich nicht verschoben werden muss, sondern alleine mit einer Lenkeinheit 12 der Laserstrahl (entsprechend Figur 3) über den gesamten Bereich, z.B. 150 cm * 150 cm, geführt wird. Das Scanfeld ist bevorzugt größer als 150 mm * 150mm, z.B. großer als 1000mmx1000mm.

Dabei kann durch geeignete Anordnung z.B. von zwei Lasern in Bezug auf eine Fahrzeugwindschutzscheibe ein Laser für einen rechten Teil der Fahrzeugwindschutzscheibe zur Strukturierung eingesetzt werden, während der andere Laser für den linken Teil der Fahrzeugwindschutzscheibe zur Strukturierung eingesetzt werden kann.

Offensichtlich kann durch die Nutzung mehrerer Laser 11 und zugehöriger Lenkeinheiten 12 die Dauer der Strukturierung verringert werden. Bevorzugt ist dabei jedoch, dass die Laser 11 jeweils in Bezug auf eine zu strukturierende Fläche ortsfest sind, sodass es nicht zu Überlapp bzw. Versatz kommt.

Laser 11 gemäß Ausführungsformen der Erfindung stellen eine gepulste Laserstrahlung mit einer Leistung von 100 Watt oder mehr zur Verfügung. Gemäß einer Ausführungsform der Erfindung weist das Licht des Lasers 11 eine Wellenlänge von 355 nm, 532 nm oder 1064 nm auf und/oder der Laser 11 stellt eine gepulste Laserstrahlung mit einer Periode von wenigen Nanosekunden bis wenigen Pikosekunden zur Verfügung. D.h. es können handelsübliche Laser, wie z.B. CO₂-Laser, Nd:YAG-Laser verwendet werden.

Geeignete Pulsraten für den Laser 11 betragen mehr als 100 kHz, oder mehr als 1 MHz. Damit können Bearbeitungsgeschwindigkeit von einigen m/s, z.B. 20m/s - 50m/s, erreicht werden.

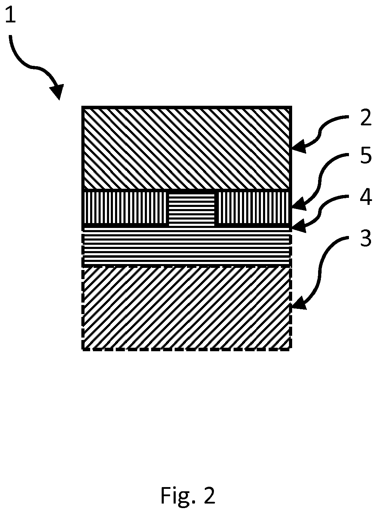

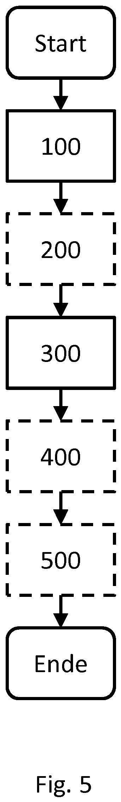

Wie bereits zuvor angedeutet, erlaubt die Erfindung ein neues Herstellungsverfahren, welches in Figur 5 skizziert ist. Das Verfahren zur Herstellung einer Glas-Scheibe 1 wie sie in ihrem Schichtaufbau in Figur 2 skizziert ist, weist zunächst den Schritt des Erhaltens 100 einer ersten gebogenen Glas-Schicht 2 auf, wobei die erste Glas-Schicht 2 zumindest abschnittsweise eine funktionelle Beschichtung 5 aufweist. Die Glas-Schicht 2 wird in die Halterung 10 eingebracht und fixiert, sodass die Beschichtung 5 näher zum Laser 11 liegt. Nunmehr wird die funktionelle Beschichtung 5 auf der ersten Glas-Schicht 2 mittels Laser-Ablation strukturiert 300.

Daher ergibt sich eine Vermeidung einer möglichen Reaktion während des Biegens.

In einer Ausgestaltung der Erfindung wird die funktionelle Beschichtung 5 nach dem Biegen der Glas-Schicht 2 aufgebracht. D.h. mittels des Verfahrens wird es nunmehr ermöglicht die Glas-Schicht zunächst zu biegen und erst anschließend die Strukturierung vorzunehmen. Somit kann auch der Schritt der Aufbringung funktioneller Beschichtungen 5 auf einen Zeitpunkt nach dem Biegen verlagert werden. Daher kann auf die Aufbringung einer Schutzschicht vor dem Biegen und die Entfernung der Schutzschicht nach dem Biegen verzichtet werden.

In einer weiteren Ausgestaltung der Erfindung weist der Schritt des Strukturierens das räumliche Verschieben eines Lasers 11 relativ zur funktionellen Beschichtung 5 auf. Hierdurch kann eine kostengünstige Herstellung ermöglicht werden.

Gemäß einer weiteren Ausgestaltung der Erfindung kann das erfindungsgemäße Verfahren weiterhin den Schritt des Erhaltens 200 einer zweiten Glas-Schicht 3, wobei die erste Glas-Schicht 2 und die zweite Glas-Schicht 3 entsprechend gebogen sind, den Schritt des Einbringens 400 einer Kombinationsfolie 4 zwischen die funktionelle Beschichtung 5, welche auf der ersten Glas-Schicht 2 befindlich ist, und der zweiten Glas-Schicht 3, sowie den Schritt des thermischen Verbindens 500 der Glas-Schichten 2 und 3 mittels der Kombinationsfolie 4 aufweisen.

Typischerweise wird der Schritt des thermischen Verbindens 500 bei einer Temperatur von typischerweise unter 140° C, d.h. zumindest bei einer Temperatur, die geringer ist als die Temperatur zum Biegen, durchgeführt, sodass Reaktionen einer funktionellen Beschichtung 5 nicht zu erwarten sind.

D.h., das Verfahren kann auch zur Herstellung von Verbundglasscheiben 1 - wie in Figur 2 anhand der gestrichelt dargestellten zweiten Glas-Schicht 3 und der Kombinationsfolie 4 - verwendet werden.

### Bezugszeichenliste

- 1: Glas-Scheibe
- 2: erste gebogene Glas-Schicht
- 3: zweite gebogenen Glas-Schicht
- 4: Kombinationsfolie
- 5: funktionelle Beschichtung
- 10: Halterung
- 11: Laser
- 12: Lenkeinheit
- 13: Halteinrichtung
- 20: Vorrichtung
- d: Abstand zwischen Laser 11 und funktionellen Beschichtung 5

### Verfahrensschritte

- 100: Erhalten einer ersten gebogenen Glas-Schicht 2
- 200: Erhalten einer zweiten gebogenen Glas-Schicht 3
- 300: Strukturieren der funktionellen Beschichtung 5
- 400: Einbringen einer Kombinationsfolie 4
- 500: thermisches Verbinden der Glas-Schichten 2,3

## Patentansprüche

1. Vorrichtung (20) zur Herstellung einer strukturierten funktionellen Beschichtung (5) auf einer ersten gebogenen Glas-Schicht (2) für eine Glas-Scheibe (1), wobei die funktionelle Beschichtung (5) eine elektrisch leitfähige Beschichtung und/oder eine Low-E-Beschichtung aufweist, aufweisend
• eine Halterung (10) zur Aufnahme der ersten gebogenen Glas-Schicht (2),
• zumindest einen Laser (11) und
• eine Lenkeinheit (12), welche zur Lenkung des Strahls des Lasers (11) über die funktionelle Beschichtung (5) vorgesehen ist, sodass Teile der funktionellen Beschichtung (5) abgetragen werden, um die funktionelle Beschichtung (5) in der Fläche zu strukturieren
**dadurch gekennzeichnet, dass** die Lenkeinheit (12) in Form eines Freiheitsgrade aufweisenden Kippspiegels und/oder eines ein-, zwei- /oder drei-dimensional verschiebbaren Schlittens vorgesehen ist, und die Halterung derart ausgebildet ist dass ein Abstand (d) zwischen dem Laser (11) und der funktionellen Beschichtung (5) circa 0,5 m bis zu 2 m beträgt, wenn die erste gebogene Glas-Schicht (2) in der Halterung aufgenommen ist.

2. Vorrichtung (20) zur Herstellung nach Anspruch 1, **dadurch gekennzeichnet, dass** die Lenkeinheit (12) vorgesehen ist den Laser (11) relativ zur Oberfläche der funktionellen Beschichtung (5) zu verschieben.

3. Vorrichtung (20) zur Herstellung nach einem der Ansprüche 1 oder 2, **dadurch gekennzeichnet, dass** der Laser (11) eine gepulste Laserstrahlung mit einer Leistung von 100 Watt oder mehr zur Verfügung stellt.

4. Vorrichtung (20) zur Herstellung nach einem der Ansprüche 1 bis 3, **dadurch gekennzeichnet, dass** das Licht des Lasers (11) eine Wellenlänge von 355 nm, 532 nm oder 1064 nm aufweist.

5. Vorrichtung (20) zur Herstellung nach einem der Ansprüche 1 bis 4, **dadurch gekennzeichnet, dass** der Laser (11) eine gepulste Laserstrahlung mit einer Periode von wenigen Nanosekunden bis wenigen Pikosekunden zur Verfügung stellt.

6. Vorrichtung (20) zur Herstellung nach einem der Ansprüche 1 bis 5, **dadurch gekennzeichnet, dass** der Laser (11) ein CO₂-Laser ist.

7. Verfahren zur Herstellung einer Glas-Scheibe (1), aufweisend die Schritte:
• Erhalten (100) einer ersten gebogenen Glas-Schicht (2), wobei die erste Glas-Schicht (2) zumindest abschnittsweise eine funktionelle Beschichtung (5) aufweist, wobei die funktionelle Beschichtung (5) eine elektrisch leitfähige Beschichtung und/oder eine Low-E-Beschichtung aufweist, und wobei die funktionelle Beschichtung (5) nach dem Biegen der Glas-Schicht (2) aufgebracht wird,
• Strukturieren (300) der funktionellen Beschichtung (5) auf der ersten Glas-Schicht (2) mittels Laser-Ablation,
wobei
o der Laser (11) eine gepulste Laserstrahlung mit einer Leistung von 100 Watt oder mehr zur Verfügung stellt, und/oder
o das Licht des Lasers (11) eine Wellenlänge von 355 nm, 532 nm oder 1064 nm aufweist, und/oder
o der Laser (11) eine gepulste Laserstrahlung mit einer Periode von wenigen Nanosekunden bis wenigen Pikosekunden zur Verfügung stellt.
**dadurch gekennzeichnet, dass** ein Strahl des Lasers (11) mittels einer Lenkeinheit (12) über die funktionelle Beschichtung (5) gelenkt wird, und dass die Lenkeinheit (12) in Form eines Freiheitsgrade aufweisenden Kippspiegels und/oder eines ein-, zwei- /oder drei-dimensional verschiebbaren Schlittens vorgesehen ist, wobei der Abstand (d) zwischen Laser (11) und der funktionellen Beschichtung (5) circa 0,5 m bis zu 2 m beträgt.

8. Verfahren nach einem der Ansprüche 7, wobei der Strukturierungsschritt das räumliche Verschieben eines Lasers (11) relativ zur funktionellen Schicht (5) aufweist.

9. Verfahren nach einem der Ansprüche 7 oder 8, weiterhin aufweisend die Schritte
• Erhalten (200) einer zweiten gebogenen Glas-Schicht (3), wobei die erste Glas-Scheibe (2) und die zweite Glas- Schicht (3) entsprechend gebogen sind,
• Einbringen (400) einer Kombinationsfolie (4) zwischen die funktionelle Beschichtung (5) auf der ersten Glas-Schicht (2) und die zweite Glas-Schicht (3),
• thermisches Verbinden (500) der Glas-Schichten (2,3) mittels der Kombinationsfolie (4).

## Claims

1. Device (20) for producing a patterned functional coating (5) on a first curved glass layer (2) for a glass pane (1), wherein the functional coating (5) has an electrically conductive coating and/or a low-E coating, comprising
• a support (10) for holding the first curved glass layer (2),
• at least one laser (11), and
• a guidance unit (12), provided for guiding the beam of the laser (11) over the functional coating (5) such that parts of the functional coating (5) are removed in order to pattern the functional coating (5) in the surface,
**characterized in that** the guidance unit (12) is provided in the form of a tilting mirror having degrees of freedom and/or a carriage movable in one, two, and/or three dimensions, and the support is implemented such that a distance (d) between the laser (11) and the functional coating (5) is approx. 0.5 m up to 2 m, when the first curved glass layer (2) is held in the support.

2. Device (20) for producing according to claim 1, **characterized in that** the guidance unit (12) is provided to displace the laser (11) relative to the surface of the functional coating (5).

3. Device (20) for producing according to one of claims 1 or 2, **characterized in that** the laser (11) provides pulsed laser radiation with power of 100 watts or more.

4. Device (20) for producing according to one of claims 1 through 3, **characterized in that** the light of the laser (11) has a wavelength of 355 nm, 532 nm, or 1064 nm.

5. Device (20) for producing according to one of claims 1 through 4, **characterized in that** the laser (11) provides pulsed laser radiation with a period of a few nanoseconds to a few picoseconds.

6. Device (20) for producing according to one of claims 1 through 5, **characterized in that** the laser (11) is a CO₂ laser.

7. Method for producing a glass pane (1), comprising the steps:
• Obtaining (100) a first curved glass layer (2), wherein the first glass layer (2) has, at least in sections, a functional coating (5), wherein the functional coating (5) comprises an electrically conductive coating and/or a low-E coating, and wherein the functional coating (5) is applied after the bending of the glass layer (2),
• Patterning (300) the functional coating (5) on the first glass layer (2) by laser ablation,
wherein
∘ the laser (11) provides pulsed laser radiation with power of 100 watts or more, and/or
∘ the light of the laser (11) has a wavelength of 355 nm, 532 nm, or 1064 m, and/or
∘ the laser (11) provides pulsed laser radiation with a period of a few nanoseconds to a few picoseconds,
**characterized in that** a beam of the laser (11) is guided by means of a guidance unit (12) over the functional coating (5), and that the guidance unit (12) is provided in the form of a tilting mirror having degrees of freedom and/or a carriage movable in one, two, or three dimensions, wherein the distance (d) between the laser (11) and the functional coating (5) is approx. 0.5 m up to 2 m.

8. Method according to one of claims [sic: claim] 7, wherein the patterning step comprises the spatial displacement of a laser (11) relative to the functional layer (5).

9. Method according to one of claims 7 or 8, further comprising the steps
• Obtaining (200) a second curved glass layer (3), wherein the first glass pane [sic: glass layer] (2) and the second glass layer (3) are correspondingly bent,
• Inserting (400) a combination film (4) between the functional coating (5) on the first glass layer (2) and the second glass layer (3),
• Thermal bonding (500) of the glass layers (2,3) by means of the combination film (4).

## Revendications

1. Dispositif (20) pour former un revêtement fonctionnel structuré (5) sur une première couche de verre incurvée (2) pour une plaque de verre (1), dans lequel le revêtement fonctionnel (5) présente un revêtement conducteur de l'électricité et/ou un revêtement à faible E, comprenant
• un support (10) destiné à recevoir la première couche de verre incurvée (2) ;
• au moins un laser (11) ; et
• une unité de direction (12), laquelle est prévue pour diriger le faisceau du laser (11) sur le revêtement fonctionnel (5) de telle sorte que des parties du revêtement fonctionnel (5) sont enlevées afin de structurer le revêtement fonctionnel (5) dans la surface
**caractérisé par le fait que** l'unité de direction (12) est prévue sous forme d'un miroir pivotant présentant des degrés de liberté et/ou d'un chariot déplaçable dans une, deux ou trois dimensions, et le support est conçu de telle sorte qu'une distance (d) entre le laser (11) et le revêtement fonctionnel (5) est d'environ 0,5 m jusqu'à 2 m, lorsque la première couche de verre incurvée (2) est reçue dans le support.

2. Dispositif (20) de formation selon la revendication 1, **caractérisé par le fait que** l'unité de direction (12) est prévue pour déplacer le laser (11) par rapport à la surface du revêtement fonctionnel (5).

3. Dispositif (20) de formation selon l'une des revendications 1 et 2, **caractérisé par le fait que** le laser (11) fournit un rayonnement laser pulsé ayant une puissance de 100 watts ou plus.

4. Dispositif (20) de formation selon l'une des revendications 1 à 3, **caractérisé par le fait que** la lumière du laser (11) présente une longueur d'onde de 355 nm, 532 nm ou 1064 nm.

5. Dispositif (20) de formation selon l'une des revendications 1 à 4, **caractérisé par le fait que** le laser (11) fournit un rayonnement laser pulsé ayant une période de quelques nanosecondes à quelques picosecondes.

6. Dispositif (20) de formation selon l'une des revendications 1 à 5, **caractérisé par le fait que** le laser (11) est un laser à CO₂.

7. Procédé de fabrication d'une plaque de verre (1), comportant les étapes :
• obtenir (100) une première couche de verre incurvée (2), la première couche de verre (2) présentant au moins par endroits un revêtement fonctionnel (5), le revêtement fonctionnel (5) présentant un revêtement conducteur de l'électricité et/ou un revêtement à faible E, et le revêtement fonctionnel (5) étant appliqué après que la couche de verre (2) a été incurvée ;
• structurer (300) le revêtement fonctionnel (5) sur la première couche de verre (2) au moyen d'une ablation laser,
dans lequel
∘ le laser (11) fournit un rayonnement laser pulsé ayant une puissance de 100 watts ou plus, et/ou
∘ la lumière du laser (11) présente une longueur d'onde de 355 nm, 532 nm ou 1064 nm, et/ou
∘ le laser (11) fournit un rayonnement laser pulsé ayant une période de quelques nanosecondes à quelques picosecondes,
**caractérisé par le fait qu'**un faisceau du laser (11) est dirigé sur le revêtement fonctionnel (5) au moyen d'une unité de direction (12), et que l'unité de direction (12) est prévue sous forme d'un miroir pivotant présentant des degrés de liberté et/ou d'un chariot déplaçable dans une, deux ou trois dimensions, la distance (d) entre le laser (11) et le revêtement fonctionnel (5) étant d'environ 0,5 m à 2 m.

8. Procédé selon la revendication 7, dans lequel l'étape de structuration présente le déplacement dans l'espace d'un laser (11) par rapport à la couche fonctionnelle (5).

9. Procédé selon l'une des revendications 7 et 8, comprenant en outre les étapes :
• obtenir (200) une seconde couche de verre incurvée (3), la première couche de verre (2) et la seconde couche de verre (3) étant incurvées de manière correspondante ;
• introduire (400) une feuille de combinaison (4) entre le revêtement fonctionnel (5) sur la première couche de verre (2) et la seconde couche de verre (3) ;
• lier thermiquement (500) les couches de verre (2, 3) au moyen de la feuille de combinaison (4).
